# EUROPÄISCHE PATENTSCHRIFT

(11) **EP 4 320 001 B1**
(45) Veröffentlichungstag und Bekanntmachung des Hinweises auf die Patenterteilung: **02.07.2025**
(21) Anmeldenummer: 23729347.7
(22) Anmeldetag: 23.05.2023
(51) Int. Cl.: B60H 1/34

(54) **LUFTAUSSTRÖMER ZUM BELÜFTEN EINES INNENRAUMS EINES FAHRZEUGS**
AIR VENT FOR VENTILATING AN INTERIOR OF A VEHICLE
BOUCHE D'AIR POUR VENTILER UN ESPACE INTÉRIEUR D'UN VÉHICULE

(30) Priorität: 28.06.2022 DE 102022002328
(43) Veröffentlichungstag der Anmeldung: 14.02.2024
(73) Patentinhaber: Mercedes-Benz Group AG, 70372 Stuttgart (DE)
(72) Erfinder: MENZEL, Christoph, 70184 Stuttgart (DE); PLOCHER, Bernd, 72108 Rottenburg (DE); KEETMANN, Daniel, 70499 Stuttgart (DE)
(74) Vertreter: Novagraaf Group
(86) Internationale Anmeldenummer: PCT/EP2023/063840
(87) Internationale Veröffentlichungsnummer: WO 2024/002591

(56) Entgegenhaltungen:
- EP-A1- 3 632 726
- DE-A1- 102005 027 746
- US-A1- 2018 319 255

## Beschreibung

Die Erfindung betrifft einen Luftausströmer zum Belüften eines Innenraums eines Fahrzeugs, gemäß dem Oberbegriff von Patentanspruch 1. Die Erfindung betrifft außerdem ein Fahrzeug, mit wenigstens einem solchen Luftausströmer.

Der DE 10 2015 017 009 A1 ist eine Auslassvorrichtung zur Lüftung eines Fahrzeuginneren durch Erzeugung einer Auslass-Strömung als bekannt zu entnehmen. Die Auslassvorrichtung weist ein Gehäuse mit einer inneren, einen Austrittsabschnitt bildenden Oberfläche auf, die sich in einer axialen Richtung zwischen einer Luft-Eintrittsöffnung und einer Luft-Austrittsöffnung, die entgegengesetzt zu der Luft-Eintrittsöffnung gelegen ist, erstreckt. Die innere Oberfläche ist umlaufend symmetrisch um eine Gehäuseachse gebildet und weist einen axial umlaufenden Abschnitt und einen Endabschnitt des Austrittsabschnitts auf, der die Luft-Austrittsöffnung bildet.

Die EP 3 530 506 A1 offenbart einen Luftausströmer, mit einem Gehäuse mit einem der Mantelfläche eines Zylinders entsprechenden Abschnitt, der eine Luft-Eintrittsöffnung und eine Luft-Austrittsöffnung aufweist. Aus der DE 10 2019 119 732 A1 ist ein Personenanströmer für ein Kraftfahrzeug bekannt. Außerdem offenbart die

DE 10 2019 131 554 A1 eine Luftauslassvorrichtung für den Auslass einer Luftströmung entlang einer Auslassrichtung in einen Fahrgastraum eines Fahrzeugs.

Die gattungsbildende US 2018 319 255 A1 offenbart eine Entlüftungsöffnung zur Belüftung eines Fahrgastraums eines Kraftfahrzeugs, einschließlich eines rechteckigen Gehäuses und einer rechteckigen Luftaustrittsöffnung. Zur Führung eines Luftstroms und zur Steuerung eines Luftvolumens wird ein Umströmungskörper vorgeschlagen, der im Gehäuse längs und quer verschiebbar ist und auch zum Verschließen der Luftaustrittsöffnung verwendet werden kann.

In der EP 3 632 726 A1 ist ein Luftdurchlass für ein Fahrzeug offenbart, mit einem Gehäuse, das eine Lufteintrittsöffnung, eine Luftaustrittsöffnung und einen Hohlraum definiert, wobei das Gehäuse eine erste Wand und eine zweite Wand aufweist, die einander zugewandt sind und eine Verengung des Hohlraums bis zur Austrittsöffnung definieren, wobei der Luftauslass ferner ein in dem Hohlraum angeordnetes Führungsmittel aufweist, mit einem ersten Ende in der Nähe der Austrittsöffnung, wobei das Führungsmittel zwischen einer ersten Position, in der das erste Ende neben der ersten Wand angeordnet ist, und einer zweiten Position, in der das erste Ende neben der zweiten Wand angeordnet ist, bewegbar ist.

Die DE 10 2005 027 746 A1 betrifft einen Luftausströmer für den Fahrgastraum eines Fahrzeuges, der eine an der Luftaustritttsseite eines Luftströmungskanals an einem Gehäuse angeordnete Blende mit durch Blendenstege getrennten schlitzförmigen Ausströmöffnungen und diesen zugeordneten und in ihrer Stellung zu diesen veränderbaren Luftleitelementen sowie ein Bedienungselement für diese aufweist. Sie löst die Aufgabe, einen derartigen Luftausströmer so zu gestalten, dass dessen optische Anmutung hochwertig ist und die Ausströmrichtung der den Luftstrom bildenden Luftteilströme im Wesentlichen gleich ist. Dazu sind die Blendenstege im Querschnitt gehäuseinnenseitig zur Ausbildung von Luftleitflächen luftstromaufwärts verjüngt, und die Luftleitelemente sind gehäuseinnenseitig luftstromaufwärts im Wesentlichen keilförmig oder konvex gewölbt ausgebildet und zwischen einer Schließstellung in der jeweiligen Ausströmöffnung und gehäuseinnenseitig wählbaren Offenstellungen verstellbar. Die Offenstellungen sind dabei entweder durch die Anlage des jeweiligen Luftleitelementes an einem der beiden die jeweiligen Ausströmöffnung begrenzenden Blendenstege oder auch durch einen Abstand des jeweiligen Luftleitelementes zu den benachbarten Blendenstegen gegeben.

Aufgabe der vorliegenden Erfindung ist es, einen Luftausströmer zum Belüften eines Innenraums eines Fahrzeugs, sowie ein Fahrzeug mit wenigstens einem solchen Luftausströmer zu schaffen, so dass eine besonders vorteilhafte Einstellbarkeit des Luftausströmers auf besonders vorteilhafte Weise realisiert werden kann.

Diese Aufgabe wird durch einen Luftausströmer mit den Merkmalen des Patentanspruchs 1 sowie durch ein Fahrzeug mit den Merkmalen des Patentanspruchs 8 gelöst. Vorteilhafte Ausgestaltungen mit zweckmäßigen Weiterbildungen der Erfindung sind in den übrigen Ansprüchen angegeben.

Ein erster Aspekt der Erfindung betrifft einen Luftausströmer zum Belüften eines auch als Fahrgastzelle oder Fahrgastraum bezeichneten Innenraums eines Fahrzeugs. Dies bedeutet, dass das vorzugsweise als Kraftwagen, insbesondere als Personenkraftwagen, ausgebildete Fahrzeug in seinem vollständig hergestellten Zustand den Luftausströmer aufweist, welcher vorzugsweise im Innenraum angeordnet ist. Insbesondere ist der Innenraum durch einen beispielsweise als selbsttragende Karosserie ausgebildeten Aufbau des Fahrzeugs gebildet. Unter dem Belüften des Innenraums ist zu verstehen, dass dem Innenraum Luft zugeführt wird, mithin die genannte Luft in den Innenraum eingeleitet wird. Hierfür ist der Luftausströmer von der Luft durchströmbar. Der Luftausströmer weist ein auch als Außengehäuse bezeichnetes Gehäuse auf, welches zum Belüften des Innenraums von der genannten Luft durchströmbar ist. Dies bedeutet, dass während eines Betriebs des Luftausströmers die Luft den Luftausströmer durchströmt und mittels des Luftausströmers in den Innenraum eingeleitet wird, wodurch der Innenraum belüftet wird. Dies bedeutet insbesondere, dass die den Luftausströmer beziehungsweise das Gehäuse durchströmende und aus dem Luftausströmer beziehungsweise dem Gehäuse ausströmende Luft in den Innenraum einströmt. Hierfür weist der Luftausströmer beispielsweise eine Austrittsöffnung auf, welche von der das Gehäuse und somit den Luftausströmer durchströmenden Luft durchströmbar ist, wobei die die Austrittsöffnung durchströmende und dadurch aus dem Luftausströmer, insbesondere aus dem Gehäuse, ausströmende Luft in den Innenraum einströmt. Insbesondere ist die Austrittsöffnung eine Öffnung des Gehäuses, so dass beispielsweise die Austrittsöffnung, insbesondere direkt, durch das Gehäuse begrenzt ist. Insbesondere ist die Austrittsöffnung entlang ihrer Umfangsrichtung vollständig umlaufend durch das Gehäuse, insbesondere direkt, begrenzt. Dabei ist es insbesondere denkbar, dass das Gehäuse insbesondere zum Innenraum hin an der Austrittsöffnung endet.

Der Luftausströmer weist einen in dem Gehäuse angeordneten, beispielsweise separat von dem Gehäuse ausgebildeten, Strömungskörper auf, welcher auch als Innenkörper bezeichnet wird. Der Strömungskörper ist von der das Gehäuse durchströmenden Luft, insbesondere außenumfangsseitig, umströmbar. Dies bedeutet, dass der Strömungskörper eine außenumfangsseitige Mantelfläche aufweist, welche von der das Gehäuse durchströmenden Luft, insbesondere direkt, umströmbar ist. Beispielsweise ist die außenumfangsseitige Mantelfläche des Strömungskörpers einer innenumfangsseitigen Mantelfläche des Gehäuses zugewandt, wobei beispielsweise durch die innenumfangsseitige Mantelfläche des Gehäuses ein Luftkanal des Gehäuses und somit des Luftausströmers, insbesondere direkt, begrenzt ist, wobei der Luftkanal und somit das Gehäuse von der genannten, dem Innenraum zuzuführenden Luft durchströmbar sind.

Der Luftausströmer weist außerdem eine stromauf des Strömungskörpers angeordnete und relativ zu dem Gehäuse und relativ zu dem Strömungskörper bewegbare Leitklappe auf, welche auch als Stellklappe oder Klappe bezeichnet wird. Mittels der Leitklappe kann, insbesondere durch relativ zu dem Gehäuse und vorzugsweise auch relativ zu dem Strömungskörper erfolgendes Bewegen der Leitklappe eine Ausströmrichtung, in welche die Luft aus dem Luftausströmer ausströmt und, insbesondere gleichzeitig, in den Innenraum einströmt, einstellbar, das heißt veränderbar oder variierbar ist. Unter dem Merkmal, dass die Leitklappe stromauf des Strömungskörpers angeordnet ist, ist zu verstehen, dass die das Gehäuse, insbesondere den Luftkanal durchströmende Luft auf ihrem Weg durch das Gehäuse, insbesondere durch den Luftkanal, zu dem Innenraum, insbesondere zu der Austrittsöffnung, zunächst die Leitklappe an- und umströmt und daraufhin den Strömungskörper umströmt. Dadurch, dass die Luft auf ihrem Weg durch das Gehäuse zu dem Innenraum die Leitklappe an- und umströmt, kann beispielsweise die Luft mittels der Leitklappe umgelenkt, umgeleitet oder geleitet werden, um dadurch die Ausströmrichtung einzustellen.

Die genannte Austrittsöffnung des Luftausströmers erstreckt sich beispielsweise in einer ersten Ebene, welche auch als Austrittsebene bezeichnet wird. Beispielsweise weist das Gehäuse eine Eintrittsöffnung auf, über welche die Luft in das Gehäuse, insbesondere in den Luftkanal, einleitbar ist. Beispielsweise erstreckt sich die Eintrittsöffnung in einer zweiten Ebene, welche auch als Eintrittsebene bezeichnet wird. Dabei ist denkbar, dass die erste Ebene und die zweite Ebene voneinander beabstandet sind und parallel zueinander verlaufen.

Um nun eine besonders vorteilhafte Einstellbarkeit des Luftausströmers auf besonders vorteilhafte, insbesondere auf besonders gewichts- und kostengünstige, Weise realisieren zu können, ist es erfindungsgemäß vorgesehen, dass der Strömungskörper relativ zu dem Gehäuse und vorzugsweise auch relativ zu der Leitklappe translatorisch bewegbar ist, wodurch ein von der Luft durchströmbarer und in dem Gehäuse angeordneter Strömungsquerschnitt des Luftausströmers einstellbar, das heißt veränderbar oder variierbar ist. Insbesondere handelt es sich bei dem genannten Strömungsquerschnitt um den engsten, von der Luft auf ihrem Weg durch den Luftausströmer durchströmbaren Strömungsquerschnitt des Luftausströmers. Unter dem Merkmal, dass der Strömungsquerschnitt durch relativ zu dem Gehäuse und vorzugsweise auch relativ zu der Leitklappe erfolgendes, translatorisches Bewegen des Strömungskörpers eingestellt werden kann, ist zu verstehen, dass durch relativ zu dem Gehäuse und vorzugsweise auch relativ zu der Leitklappe erfolgendes, translatorisches Bewegen des Strömungskörpers der Strömungsquerschnitt wahlweise vergrößert oder verkleinert werden kann. Durch Einstellen des Strömungsquerschnitts kann beispielsweise eine Menge der dem Innenraum zuzuführenden Luft bedarfsgerecht eingestellt werden. Ferner kann beispielsweise durch Einstellen des Strömungsquerschnitts eine so genannte Wurfweite oder Einwurfweite der Luft eingestellt werden. Unter der Wurfweite beziehungsweise Einwurfweite ist eine Strecke zu verstehen, die die den Luftausströmer durchströmende Luft, insbesondere ausgehend von dem Luftausströmer beziehungsweise ausgehend von der Austrittsöffnung, in den Innenraum eindringt. Da es nun erfindungsgemäß möglich ist, den Strömungsquerschnitt und somit die Menge der dem Innenraum zuzuführenden Luft und/oder die Wurfweite der dem Innenraum zuzuführenden Luft mittels des Strömungskörpers einzustellen, kann beispielsweise auf eine zusätzliche Verstell- oder Schließklappe insbesondere zum Verschließen des Luftausströmers verzichtet werden, so dass die Teileanzahl und somit das Gewicht und die Kosten des Luftausströmers besonders gering gehalten werden können. Somit können der Luftausströmer und somit beispielsweise die Menge der dem Innenraum zuzuführenden Luft und/oder die Wurfweite der dem Innenraum zuzuführenden Luft bauraum- und kostengünstig eingestellt werden. Dadurch, dass der Strömungskörper relativ zu dem Gehäuse translatorisch bewegbar ist, kann beispielsweise eine optisch besonders vorteilhafte Inszenierung des Luftausströmers, insbesondere dessen Funktionsweise, realisiert werden, insbesondere beispielsweise dadurch, dass beispielsweise eine dem Innenraum zugewandte Stirnseite des Strömungskörpers insbesondere über die Austrittsöffnung optisch wahrnehmbar ist, insbesondere von sich im Innenraum aufhaltenden Insassen.

Beispielsweise können durch relativ zu dem Gehäuse erfolgendes translatorisches Bewegen des Strömungskörpers wenigstens zwei voneinander unterschiedliche Werte des Strömungsquerschnitts eingestellt werden. Ein erster der Werte ist beispielsweise Null oder größer als Null, wobei beispielsweise ein zweiter der Werte größer als der erste Wert ist. Durch Einstellen des zweiten Werts strömt beispielsweise gegenüber einem Einstellen des ersten Werts des Strömungsquerschnitts eine größere Menge der Luft in den Innenraum ein und/oder die Wurfweite ist größer. Durch Einstellen des ersten Werts kann beispielsweise insbesondere dann, wenn der erste Wert Null ist, der Strömungsquerschnitt fluidisch versperrt sein, wodurch der Luftausströmer nicht von Luft durchströmbar ist, mithin ein Strömen von Luft oder der genannten Luft durch den Luftausströmer in den Innenraum vermieden wird. Insbesondere kann eine Strömungsgeschwindigkeit der Luftausströmer durch das Einstellen des Strömungsquerschnitts eingestellt, das heißt variiert werden, wobei beispielsweise die Luft mit der genannten Strömungsgeschwindigkeit aus dem Luftausströmer ausströmt und in den Innenraum einströmt, insbesondere die Austrittsöffnung durchströmt. Insbesondere kann hierdurch die Wurfweite eingestellt, das heißt variiert werden.

Erfindungsgemäß ist zum Belüften des Innenraums das Gehäuse zumindest stromauf der Leitklappe in eine Strömungsrichtung von der Luft durchströmbar. Dies bedeutet, dass die das Gehäuse, insbesondere den Luftkanal, und somit den Luftausströmer durchströmende und dem Innenraum zuzuführende Luft die genannte Strömungsrichtung zumindest stromauf der Leitklappe aufweist. Diese vorgenannte Strömungsrichtung wird auch als erste Strömungsrichtung bezeichnet. Da beispielsweise die Luft mittels der Leitklappe umgelenkt, umgeleitet oder geleitet wird, um dadurch beispielsweise die auch als Austrittsrichtung bezeichnete Ausströmrichtung einzustellen, ist es denkbar, dass die Luft stromab der Leitklappe eine von der ersten Strömungsrichtung unterschiedliche, insbesondere schräg oder senkrecht zur ersten Strömungsrichtung verlaufende, zweite Strömungsrichtung aufweist, so dass beispielsweise die Luft das Gehäuse, insbesondere den Luftkanal, stromab der Leitklappe in die zweite Strömungsrichtung durchströmt. Dabei ist es insbesondere denkbar, dass die erste Strömungsrichtung senkrecht zur Austrittsebene und beispielsweise auch senkrecht zur Eintrittsebene verläuft. Insbesondere fällt die erste Strömungsrichtung mit einer axialen Richtung des Gehäuses und somit des Luftausströmers insgesamt zusammen. Es ist denkbar, dass die Austrittsöffnung und/oder die Eintrittsöffnung kreisrund ist und somit die Form eines Kreises aufweist, dessen Mittelpunkt beispielsweise auf der axialen Richtung des Gehäuses und somit des Luftausströmers insgesamt liegt. Insbesondere ist die erste Strömungsrichtung gerade, mithin verläuft die erste Strömungsrichtung entlang einer Geraden, auf der beispielsweise der genannte Mittelpunkt liegt. Wenn im Folgenden die Rede von der Strömungsrichtung ist, so ist darunter, falls nichts anderes angegeben ist, die erste Strömungsrichtung zu verstehen.

Es ist vorgesehen, dass die Leitklappe um eine mit der Strömungsrichtung und somit mit der axialen Richtung des Gehäuses und des Luftausströmers insgesamt zusammenfallende Drehachse relativ zu wenigstens einem Gehäuseteil des Gehäuses und relativ zu dem Strömungskörper drehbar ist, um dadurch die Ausströmrichtung einzustellen. Dadurch kann eine besonders umfangreiche Einstellbarkeit des Luftausströmers beziehungsweise der Ausströmrichtung auf besonders kostengünstige Weise dargestellt werden.

Um dabei den Strömungsquerschnitt besonders bedarfsgerecht sowie auf besonders kostengünstige Weise einstellen, das heißt variieren zu können, ist es in weiterer Ausgestaltung der Erfindung vorgesehen, dass der Strömungskörper entlang der Strömungsrichtung und somit vorzugsweise in axialer Richtung des Gehäuses und des Luftausströmers insgesamt relativ zu dem Gehäuse und vorzugsweise auch relativ zu der Leitklappe translatorisch hin- und herbewegbar ist, wodurch der Strömungsquerschnitt einstellbar, das heißt variierbar ist.

Eine weitere Ausführungsform zeichnet sich dadurch aus, dass der Strömungskörper zumindest über seine überwiegende und somit zumindest über mehr als die Hälfte seiner entlang der Strömungsrichtung und somit in axialer Richtung des Luftausströmers verlaufenden Länge außenumfangsseitig rotationssymmetrisch ausgebildet ist. Hierunter ist insbesondere zu verstehen, dass die zuvor genannte, außenumfangsseitige Mantelfläche des Strömungskörpers zumindest über die überwiegende, entlang der Strömungsrichtung verlaufende Länge des Strömungskörpers rotationssymmetrisch ausgebildet ist. Dadurch kann der Innenraum auf besonders strömungsgünstige Weise mit der Luft versorgt werden.

Um eine besonders vorteilhafte Einstellbarkeit des Luftausströmers realisieren zu können, ist es in weiterer Ausgestaltung der Erfindung vorgesehen, dass die Leitklappe um eine senkrecht zur Strömungsrichtung verlaufende Schwenkachse relativ zu dem Gehäuse und relativ zu dem Strömungskörper verschwenkbar ist, um dadurch die Ausströmrichtung einzustellen. Unter dem Merkmal, dass die Schwenkachse senkrecht zur Strömungsrichtung verläuft, ist zu verstehen, dass die Strömungsrichtung senkrecht zu einer Strömungsebene verläuft, wobei die Strömungsebene beispielsweise parallel zur Austrittsebene verläuft oder mit der Austrittsebene zusammenfällt. Die Schwenkachse verläuft senkrecht zu einer Schwenkachsenebene, wobei die Strömungsebene und die Schwenkachsenebene senkrecht zueinander verlaufen.

Um die Leitklappe besonders bedarfsgerecht und einfach um die Drehachse drehen und somit die Ausströmrichtung bedarfsgerecht einstellen zu können, ist es in weiterer Ausgestaltung der Erfindung vorgesehen, dass das Gehäuse das wenigstens eine Gehäuseteil als erstes Gehäuseteil aufweist, welches mit der Leitklappe gekoppelt ist. Außerdem weist das Gehäuse ein zweites Gehäuseteil auf, welches beispielsweise stromauf oder stromab des ersten Gehäuseteils angeordnet ist. Das erste Gehäuseteil und mit dem ersten Gehäuseteil die Leitklappe sind um die Drehachse relativ zu dem zweiten Gehäuseteil und relativ zu dem Strömungskörper drehbar. Insbesondere ist beispielsweise das erste Gehäuseteil als ein auch als Verstellring oder Außenring bezeichneter Ring ausgebildet, über welchen insbesondere durch relativ zu dem zweiten Gehäuseteil erfolgendes Drehen des Rings die Leitklappe besonders bedarfsgerecht und vorteilhaft um die Drehachse gedreht werden kann.

Um eine besonders umfangreiche Einstellbarkeit des Luftausströmers auf besonders kostengünstige Weise zu realisieren, ist bei einer weiteren Ausführungsform eine Koppeleinrichtung vorgesehen, mittels welcher der Strömungskörper und die Leitklappe miteinander derart gekoppelt sind, dass mittels genau eines insbesondere elektrisch betreibbaren Aktors sowohl der Strömungskörper als auch die Leitklappe relativ zu dem Gehäuse bewegbar sind. Insbesondere kann der Aktor Bestandteil des Luftausströmers sein. Über die Koppeleinrichtung kann der Aktor beispielsweise sowohl den Strömungskörper als auch die Leitklappe betätigen und hierdurch beispielsweise den Strömungskörper translatorisch relativ zu dem Gehäuse verschieben und die Leitklappe relativ zu dem Gehäuse bewegen, insbesondere verschwenken und/oder drehen. Hierdurch kann ein besonders kostengünstiger Aufbau des Luftausströmers gewährleistet werden.

Schließlich hat es sich als besonders vorteilhaft gezeigt, wenn das Gehäuse zumindest in einem Längenbereich des Gehäuses innenumfangsseitig rotationssymmetrisch ausgebildet ist, wobei der Strömungskörper in dem Längenbereich angeordnet ist. Hierdurch kann eine besonders strömungsgünstige Zuführung der Luft in den Innenraum dargestellt werden.

Der Strömungsquerschnitt kann durch relativ zu dem Gehäuse erfolgendes, translatorisches Bewegen des Strömungskörpers beispielsweise auf folgende Weise eingestellt werden: Der Strömungskörper ist beispielsweise zwischen wenigstens zwei voneinander unterschiedlichen Stellungen relativ zu dem Gehäuse translatorisch bewegbar, mithin verschiebbar. In einer ersten der Stellungen des Strömungskörpers ist beispielsweise der erste des Strömungsquerschnitts eingestellt, und in einer zweiten der Stellungen ist beispielsweise der zweite Wert des Strömungsquerschnitts eingestellt. Beispielsweise ist zumindest ein erster Wandungsbereich des Strömungskörpers in der ersten Stellung näher an einem zweiten Wandungsbereich des Gehäuses angeordnet als in der zweiten Stellung, so dass beispielsweise in der ersten Stellung der Strömungsquerschnitt beziehungsweise der Wert des Strömungsquerschnitts geringer als in der zweiten Stellung ist. Insbesondere ist es denkbar, dass in der ersten Stellung der erste Wandungsbereich, insbesondere direkt, an dem zweiten Wandungsbereich anliegt, wodurch beispielsweise in der ersten Stellung der Strömungsquerschnitt auf Null eingestellt, mithin verschlossen ist. Ferner ist es denkbar, dass zumindest in der zweiten Stellung die Wandungsbereiche den Strömungsquerschnitt direkt begrenzen. Beispielsweise ist es denkbar, dass sich der zweite Wandungsbereich in die Strömungsrichtung verjüngt, beispielsweise verjüngt sich, insbesondere auch, der erste Wandungsbereich in die Strömungsrichtung. Dadurch kann der Strömungsquerschnitt besonders vorteilhaft eingestellt werden.

Ein zweiter Aspekt der Erfindung betrifft ein vorzugsweise als Kraftwagen, insbesondere als Personenkraftwagen, ausgebildetes Fahrzeug, welches wenigstens einen Luftausströmer gemäß dem ersten Aspekt der Erfindung aufweist. Vorteile und vorteilhafte Ausgestaltungen des ersten Aspekts der Erfindung sind als Vorteile und vorteilhafte Ausgestaltungen des zweiten Aspekts der Erfindung anzusehen.

Ein weiterer Vorteil der Erfindung ist, dass dadurch, dass die Leitklappe stromauf des Strömungskörpers angeordnet ist, die Leitklappe für sich im Innenraum aufhaltende Insassen optisch nicht sichtbar, das heißt optisch nicht wahrnehmbar ist. Somit kann das auch als Luftlenkung bezeichnete Einstellen der Ausströmöffnung ohne für sich im Innenraum aufhaltende Personen sichtbar wirkliche Teile erfolgen, und zwar durch die stromauf des Strömungskörpers angeordnete Leitklappe, welche bezogen auf eine Blickrichtung, in welche eine sich im Innenraum aufhaltende Person den Luftausströmer und dabei insbesondere den Strömungskörper betrachtet, hinter dem Strömungskörper angeordnet und somit für die Person nicht sichtbar ist. Ferner ermöglicht die Erfindung eine besonders vorteilhafte Integration wenigstens einer oder mehrerer, zusätzlicher Funktionen in den Strömungskörper. Beispielsweise kann eine Beleuchtung in den Strömungskörper integriert sein. Dies bedeutet, dass beispielsweise an, insbesondere in, dem Strömungskörper wenigstens eine Lichtquelle angeordnet ist, welche, insbesondere unter Nutzung von elektrischer Energie, Licht bereitstellbar ist, das beispielsweise insbesondere über die Austrittsöffnung in den Innenraum einkoppelbar und somit beispielsweise von einer sich in dem Innenraum aufhaltenden Person mit deren Augen optisch wahrnehmbar ist. Alternativ oder zusätzlich kann eine Beduftung in den Strömungskörper integriert sein. Somit weist der Strömungskörper beispielsweise wenigstens eine oder mehrere Ausströmöffnungen auf, welche von einem Duftstoff durchströmbar sind, der beispielsweise von einer Duftstoffquelle bereitstellbar ist. Die den Strömungskörper umströmende und den Luftausströmer durchströmende Luft kann beispielsweise den Duftstoff, der die Ausströmöffnung durchströmt, mitnehmen, und insbesondere über die Austrittsöffnung, in den Innenraum transportieren, wodurch eine besonders vorteilhafte Beduftung des Innenraums realisiert werden kann.

Weitere Vorteile und Einzelheiten der Erfindung ergeben sich aus der nachfolgenden Beschreibung eines bevorzugten Ausführungsbeispiels sowie anhand der Zeichnung.

Die Zeichnung zeigt in:
- Fig. 1: eine schematische Längsschnittansicht eines Luftausströmers zum Belüften eines Innenraums eines Fahrzeugs;
- Fig. 2: eine schematische Vorderansicht des Luftausströmers;
- Fig. 3: eine weitere schematische Schnittansicht des Luftausströmers;
- Fig. 4: eine weitere schematische Schnittansicht des Luftausströmers;
- Fig. 5: ausschnittsweise eine schematische und perspektivische Draufsicht des Luftausströmers;
- Fig. 6: ausschnittsweise eine schematische und perspektivische Längsschnittansicht des Luftausströmers;
- Fig. 7: ausschnittsweise eine weitere schematische und perspektivische Längsschnittansicht des Luftausströmers;
- Fig. 8: ausschnittsweise eine schematische und perspektivische Querschnittsansicht des Luftausströmers; und
- Fig. 9: ausschnittsweise eine weitere schematische und perspektivische Querschnittsansicht des Luftausströmers.

In den Figuren sind gleiche oder funktionsgleiche Elemente mit gleichen Bezugszeichen versehen.

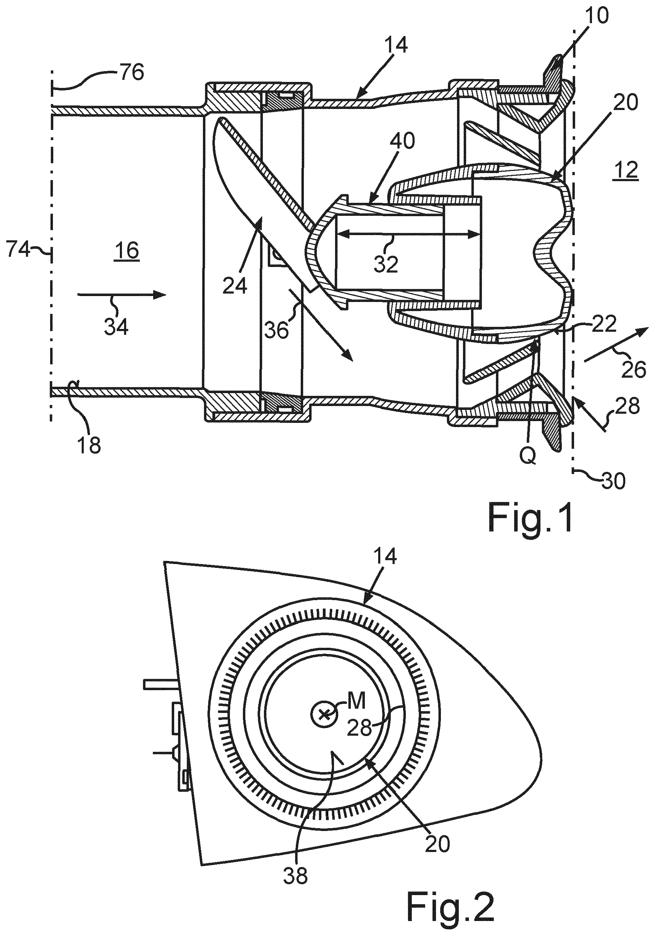

Fig. 1 zeigt in einer schematischen Längsschnittansicht einen Luftausströmer 10 zum Belüften eines auch als Fahrgastzelle oder Fahrgastraum bezeichneten Innenraums 12 eines Fahrzeugs, welches vorzugsweise als Kraftwagen, insbesondere als Personenkraftwagen, ausgebildet ist und in seinem vollständig hergestellten Zustand den Luftausströmer 10 aufweist. Der Luftausströmer 10 wird auch als Luftdüse oder Belüftungsdüse bezeichnet, obwohl der Luftausströmer 10 nicht notwendigerweise als eine Düse im eigentlichen technischen Sinne ausgebildet sein muss. Der Luftausströmer 10 weist ein Gehäuse 14 auf, welches zum Belüften des Innenraums 12 von Luft, welche auch als Innenraumluft bezeichnet wird, durchströmbar ist. Dies bedeutet, dass während eines Betriebs des Luftausströmers 10 die genannte Luft das Gehäuse 14 und somit den Luftausströmer 10 durchströmt und dabei insbesondere aus dem Luftausströmer 10, mithin aus dem Gehäuse 14 ausströmt und dabei, insbesondere gleichzeitig, in den Innenraum 12 einströmt. Hierdurch wird die Luft dem Innenraum 12 zugeführt, mithin in den Innenraum 12 eingeleitet, wodurch der Innenraum 12 belüftet wird.

Das Gehäuse 14 weist einen von der Luft durchströmbaren Luftkanal 16 auf, welcher beispielsweise, insbesondere direkt, durch eine innenumfangsseitige Mantelfläche 18 des Gehäuses 14 begrenzt ist. Der Luftausströmer 10 weist einen in dem Gehäuse 14 angeordneten und von der Luft, insbesondere direkt, umströmbaren Strömungskörper 20 auf. Insbesondere weist der Strömungskörper 20 eine außenumfangsseitige Mantelfläche 22 auf, welche beispielsweise, insbesondere in radialer Richtung des Gehäuses 14 und somit des Luftausströmers 10 insgesamt, der innenumfangsseitigen Mantelfläche 18 zugewandt ist. Während des genannten Betriebs strömt beispielsweise die Luft durch den Luftkanal 16 und somit durch das Gehäuse 14 hindurch, und die Luft umströmt die außenumfangsseitige Mantelfläche 22 und somit den Strömungskörper 20, insbesondere direkt. Der Strömungskörper 20 wird auch als Innenkörper bezeichnet.

Der Luftausströmer 10 weist auch eine in dem Gehäuse 14 angeordnete Leitklappe 24 auf, welche stromauf des Strömungskörpers 20 angeordnet ist. Vorzugsweise sind das Gehäuse 14, die Leitklappe 24 und der Strömungskörper 20 separat voneinander ausgebildete Komponenten, welche beispielsweise zumindest mittelbar miteinander gekoppelt sein können. Insbesondere während des Betriebs strömt die den Luftkanal 16 und somit das Gehäuse 14 durchströmende Luft die auch als Klappe oder Stellklappe bezeichnete Leitklappe 24, insbesondere direkt, an, wodurch beispielsweise die Leitklappe 24 die den Luftkanal 16 durchströmende Luft umlenkt, ablenkt oder lenkt. Somit kann mittels der Leitklappe 24 durch relativ zu dem Gehäuse 14 und relativ zu dem Strömungskörper 20 erfolgendes Bewegen der Leitklappe 24 die den Luftkanal 16 durchströmende Luft bedarfsgerecht umgelenkt oder abgelenkt werden, wodurch eine Ausströmrichtung, in welche die Luft aus dem Luftausströmer 10 ausströmt und in den Innenraum 12 einströmt, eingestellt, das heißt variiert werden kann. Die gemäß Fig. 1 insbesondere durch die Leitklappe 24 eingestellte Ausströmrichtung ist in Fig. 1 durch einen Pfeil 26 veranschaulicht. Es ist erkennbar, dass der Luftausströmer 10 eine Austrittsöffnung 28 aufweist, welche sich in einer gedachten Austrittsebene 30 erstreckt. Die Austrittsöffnung 28 ist entlang ihrer Umfangsrichtung vollständig umlaufend und direkt durch das Gehäuse 14 begrenzt, so dass die Austrittsöffnung 28 eine Öffnung des Gehäuses 14 ist. Über die Austrittsöffnung 28 mündet der Luftkanal 16 in den Innenraum 12, so dass die Luft während des Betriebs durch den Luftkanal 16 und durch die Austrittsöffnung 28 hindurchströmt und über die Austrittsöffnung 28 in den Innenraum 12 einströmt, insbesondere entlang der oder in die durch den Pfeil 26 veranschaulichte Ausströmrichtung.

Bei dem in den Figuren gezeigten Ausführungsbeispiel weisen das Gehäuse 14 und somit der Luftausströmer 10 auch eine Eintrittsöffnung 74 auf, über welche die Luft insbesondere in die oder entlang der ersten Strömungsrichtung in den Luftkanal sowie in das Gehäuse 14 einleitbar. Beispielsweise erstreckt sich die Eintrittsöffnung 74 in einer Eintrittsebene 76, welche vorzugsweise parallel zur Austrittsebene 30 verläuft und von der Austrittsebene 30 beabstandet ist.

Um nun auf besonders vorteilhafte Weise eine besonders vorteilhafte Einstellbarkeit des Luftausströmers 10 realisieren zu können, ist der Strömungskörper 20 relativ zu dem Gehäuse 14 und vorzugsweise auch relativ zu der Leitklappe 24 translatorisch bewegbar, was in Fig. 1 durch einen Doppelpfeil 32 veranschaulicht ist. Dies bedeutet, dass der Strömungskörper 20 insbesondere entlang einer durch den Doppelpfeil 32 veranschaulichten, Geraden, mithin entlang einer gerade verlaufenden Bewegungsrichtung relativ zu dem Gehäuse 14 und vorzugsweise auch relativ zur Leitklappe 24 translatorisch hin- und herbewegt werden kann, wodurch ein von der den Luftkanal 16 durchströmenden Luft durchströmbarer und in dem Gehäuse 14 angeordneter Strömungsquerschnitt Q des Luftausströmers 10 eingestellt, das heißt verändert oder variiert werden kann.

In Fig. 1 ist durch einen Pfeil 34 eine erste Strömungsrichtung veranschaulicht, in die die den Luftkanal 16 und somit das Gehäuse 14 durchströmende Luft zumindest stromauf der Leitklappe 24 durch den Luftkanal 16 und somit durch das Gehäuse 14 hindurch strömt. Da die den Luftkanal 16 durchströmende Luft die Leitklappe 24, insbesondere direkt, an- und umströmt und hierdurch mittels der Leitklappe 24 insbesondere ausgehend von der ersten Strömungsrichtung abgelenkt, umgelenkt, umgeleitet oder geleitet werden kann, ist es denkbar, dass die den Luftkanal 16 durchströmende Luft stromab der Leitklappe 24 den Luftkanal 16 und somit das Gehäuse 14 in eine von der ersten Strömungsrichtung unterschiedliche, zweite Strömungsrichtung hindurchströmt, wobei beispielsweise die zweite Strömungsrichtung schräg oder senkrecht zu der ersten Strömungsrichtung verläuft. In Fig. 1 ist die zweite Strömungsrichtung beispielhaft durch einen Pfeil 36 veranschaulicht. Da die Leitklappe 24 relativ zu dem Gehäuse 14 bewegbar ist, kann beispielsweise die zweite Strömungsrichtung eingestellt und somit verändert werden. Es ist denkbar, die Leitklappe 24 relativ zu dem Gehäuse 14 in eine solche Leitstellung zu bewegen, in welcher beispielsweise die zweite Strömungsrichtung der ersten Strömungsrichtung entspricht, mithin mit der ersten Strömungsrichtung zusammenfällt oder parallel zu der ersten Strömungsrichtung verläuft. Anhand des Doppelpfeils 32 und anhand des Pfeils 34 ist erkennbar, dass der Strömungskörper 20 entlang der durch den Pfeil 34 veranschaulichten, ersten Strömungsrichtung relativ zu dem Gehäuse 14 translatorisch hin- und herbewegbar ist, wodurch der Strömungsquerschnitt Q einstellbar ist. Somit fällt beispielsweise die durch den Doppelpfeil 32 veranschaulichte, gerade Bewegungsrichtung mit der durch den Pfeil 34 veranschaulichten geraden, ersten Strömungsrichtung zusammen. Bei dem in den Figuren gezeigten Ausführungsbeispiel verlaufen die Bewegungsrichtung und die erste Strömungsrichtung in axialer Richtung des Gehäuses 14 und somit des Luftausströmers 10. Mit anderen Worten fallen die erste Strömungsrichtung und die Bewegungsrichtung mit der axialen Richtung des Luftausströmers 10 beziehungsweise des Gehäuses 14 zusammen. Die axiale Richtung des Gehäuses 14 und somit des Luftausströmers 10 insgesamt verläuft senkrecht zur Austrittsebene 30. Beispielsweise ist, wie aus Fig. 2 erkennbar ist, die Austrittsöffnung 28 kreisrund und somit in Form eines Kreises ausgebildet, dessen Mittelpunkt M auf der axialen Richtung und somit auf einer mit der axialen Richtung zusammenfallenden Geraden liegt. Insbesondere liegen dabei auch die Bewegungsrichtung (Doppelpfeil 32) und die erste Strömungsrichtung (Pfeil 34) auf der genannten Geraden.

Wie aus Fig. 2 erkennbar ist, können beispielsweise sich im Innenraum 12 aufhaltende Personen mit ihren Augen den Strömungskörper 20, mithin eine frontseitige Stirnfläche 38 des Strömungskörpers 20 insbesondere über die Austrittsöffnung 28 hindurch erblicken, mithin optisch wahrnehmen. Dadurch, dass der Strömungskörper 20 relativ zu dem Gehäuse 14 translatorisch bewegbar ist, kann eine besonders vorteilhafte Inszenierung der translatorischen Bewegung des Strömungskörpers 20 und somit des Einstellens des Strömungsquerschnitts Q realisiert werden.

Besonders gut aus Fig. 1 ist erkennbar, dass der Strömungskörper zumindest über seine überwiegende, entlang der ersten Strömungsrichtung verlaufende und somit in axialer Richtung des Luftausströmers 10 verlaufende Länge außenumfangsseitig rotationssymmetrisch ausgebildet ist. Insbesondere ist die außenumfangsseitige Mantelfläche 22 zumindest über die überwiegende, mithin zumindest über mehr als die Hälfte der in axialer Richtung des Luftausströmers 10 verlaufenden Länge des Strömungskörpers 20 außenumfangsseitig rotationssymmetrisch ausgebildet.

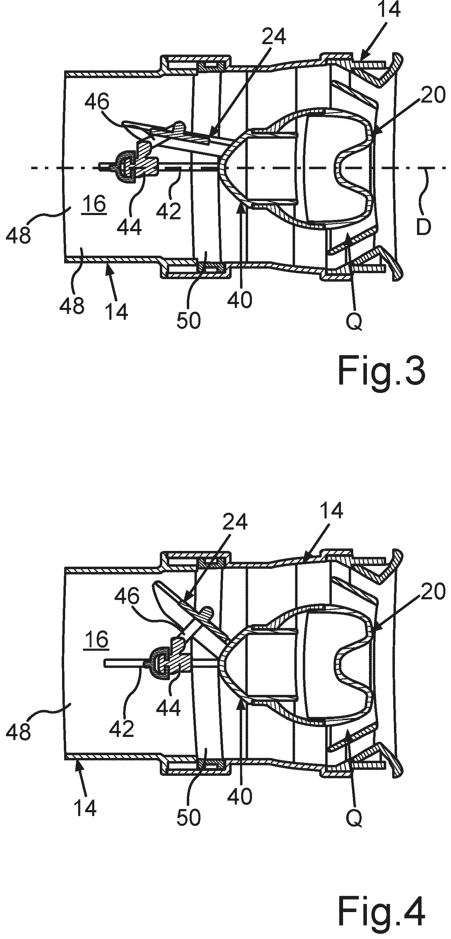

Wie aus Fig. 3 und 4 erkennbar ist, ist die Leitklappe 24 um eine senkrecht zur Strömungsrichtung und somit senkrecht zur axialen Richtung des Luftausströmers verlaufende und somit insbesondere in radialer Richtung des Luftausströmers 10 verlaufende Schwenkachse relativ zu dem Gehäuse 14 und auch relativ zu dem Strömungskörper 20 verschwenkbar, um dadurch die Ausströmrichtung einzustellen. Beispielsweise ist in dem Gehäuse 14 ein Basiselement 40 angeordnet. Dabei ist es insbesondere denkbar, dass der Strömungskörper 20 insbesondere, insbesondere entlang der Bewegungsrichtung, relativ zu dem Basiselement 40 translatorisch bewegbar, mithin verschiebbar ist, um dadurch den Strömungsquerschnitt Q einzustellen. Das Basiselement 40 weist einen vorliegend als Zapfen oder Stift ausgebildeten Lagerungsbereich 42 auf, welcher vorliegend außenumfangsseitig zylindrisch ausgebildet ist. Auf dem Lagerungsbereich 42 ist eine Lagerungshülse 44 verschiebbar angeordnet, welche somit entlang des Lagerungsbereichs 42 und insbesondere entlang der Bewegungsrichtung relativ zu dem Gehäuse 14 verschiebbar ist. Ein Hebel 46 ist gelenkig mit der auch als Schiebehülse bezeichneten Lagerungshülse 44 und gelenkig mit der Leitklappe 24 gekoppelt. Ein Verbindungspunkt, an oder in welchem der Hebel 46 gelenkig mit der Leitklappe 24 gekoppelt ist, ist von der Schwenkachse beabstandet. Insbesondere ist die Leitklappe 24 um die genannte Schwenkachse relativ zu dem Gehäuse 14 verschwenkbar an dem Gehäuse 14 gelagert beziehungsweise mit dem Gehäuse 14 gekoppelt. Wird nun die Lagerungshülse 44 relativ zu dem Lagerungsbereich 42 und relativ zu dem Gehäuse 14, insbesondere entlang der Bewegungsrichtung, verschoben, so wird hierdurch aufgrund der gelenkigen Kopplung des Hebels 46 sowohl mit der Lagerungshülse 44 als auch mit der Leitklappe 24 die Leitklappe 24 um die Schwenkachse relativ zu dem Gehäuse 14 verschwenkt. Dabei zeigt Fig. 3 eine erste Schwenkstellung der Leitklappe 24, und Fig. 4 zeigt eine zweite Schwenkstellung der Leitklappe 24, wobei die Leitklappe 24 durch Verschieben der Lagerungshülse 44 in die unterschiedlichen Schwenkstellungen relativ zu dem Gehäuse 14 verschwenkbar und somit bewegbar ist.

Des Weiteren ist die Leitklappe 24 um eine mit der ersten Strömungsrichtung und somit mit der axialen Richtung des Luftausströmers 10 zusammenfallende Drehachse D relativ zu wenigstens einem Gehäuseteil 48 des Gehäuses 14 und auch relativ zu dem Strömungskörper 20 und beispielsweise auch relativ zu dem Basiselement 40 drehbar, um dadurch die Ausströmrichtung einzustellen, mithin zu variieren. Dabei weist das Gehäuse 14 das Gehäuseteil 48 als erstes Gehäuseteil auf. Mithin ist das Gehäuseteil 48 ein erstes Gehäuseteil des Gehäuses 14 und wird auch als erstes Gehäuseteil bezeichnet. Das Gehäuse 14 weist ein zweites Gehäuseteil 50 auf, welches vorliegend als Ring ausgebildet ist und auch als Außenring bezeichnet wird. Das Gehäuseteil 50 ist mit der Leitklappe 24 gekoppelt und dadurch mit der Leitklappe 24 um die Drehachse D relativ zu dem ersten Gehäuseteil 48 und relativ zu dem Strömungskörper 20 drehbar, um dadurch die Ausströmrichtung einzustellen. Insbesondere ist die Leitklappe 24 um die genannte Schwenkachse relativ zu dem Gehäuseteil 50 verschwenkbar mit dem Gehäuseteil 50 gekoppelt, so dass sich beispielsweise die Schwenkachse mit dem Gehäuseteil 50 um die Drehachse D relativ zu dem Gehäuseteil 48 mit dreht. Somit kann die Leitklappe 24 um die Drehachse D relativ zu dem Gehäuseteil 48 in wenigstens zwei voneinander unterschiedliche Drehstellungen gedreht werden, um dadurch die Ausströmrichtung bedarfsgerecht variieren zu können.

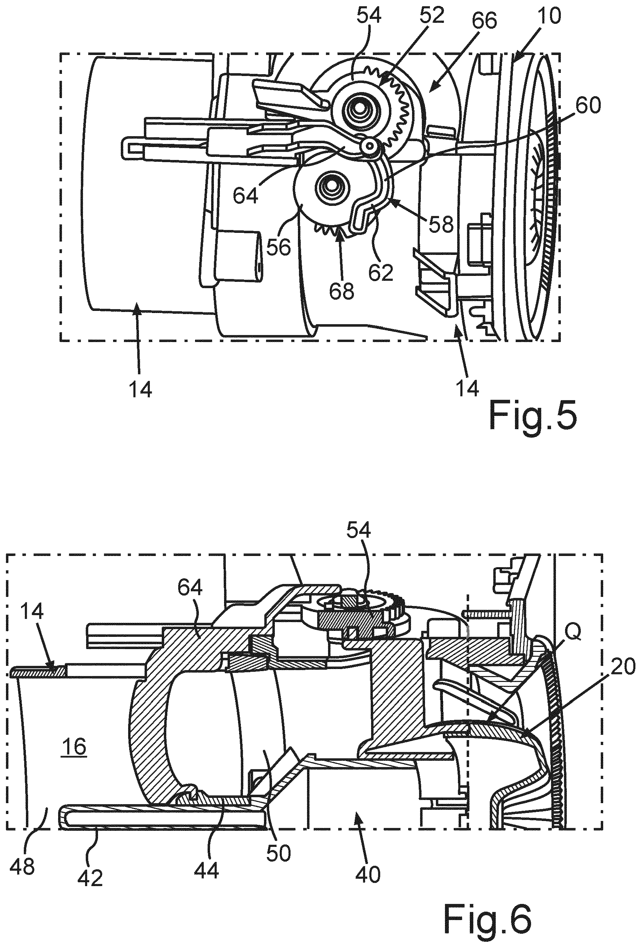

Aus Fig. 5 ist erkennbar, dass der Luftausströmer 10 eine auch als Kinematik bezeichnete Koppeleinrichtung 52 aufweist, mittels welcher, wie im Folgenden noch genauer erläutert wird, der Strömungskörper 20 und die Leitklappe 24 miteinander derart gekoppelt sind, dass mittels genau eines insbesondere elektrisch betreibbaren Aktors des Luftausströmers 10 sowohl der Strömungskörper 20 als auch die Leitklappe 24 relativ zu dem Gehäuse 14 bewegt werden können. In Zusammenschau mit Fig. 6 ist erkennbar, dass die Koppeleinrichtung 52 ein erstes Koppelelement 54 aufweist, welches vorliegend als erste Scheibe, insbesondere als erste Drehscheibe, ausgebildet ist. Die erste Drehscheibe ist um eine erste Koppelelementdrehachse relativ zu dem Gehäuse 14 drehbar. Außerdem ist das erste Koppelelement 54 mit dem Strömungskörper 20 gelenkig gekoppelt, derart, dass dann, wenn das erste Koppelelement 54 um die erste Koppelelementdrehachse relativ zu dem Gehäuse 14 gedreht wird, hierdurch der Strömungskörper 20 entlang der Bewegungsrichtung relativ zu dem Gehäuse 14 verschoben wird. Wird somit beispielsweise das erste Koppelelement 54 um die erste Koppelelementdrehachse in eine erste Drehrichtung gedreht, so wird beispielsweise der Strömungskörper 20 in eine erste Richtung relativ zu dem Gehäuse 14 verschoben, mithin translatorisch bewegt. Wird beispielsweise das erste Koppelelement 54 um die erste Koppelelementdrehachse in eine der ersten Drehrichtung entgegengesetzte, zweite Drehrichtung relativ zu dem Gehäuse 14 gedreht, so wird hierdurch beispielsweise der Strömungskörper 20 in eine der ersten Richtung entgegengesetzte, zweite Richtung relativ zu dem Gehäuse 14 verschoben. Beispielsweise fallen die Richtungen mit der Bewegungsrichtung zusammen. Beispielsweise wird der Strömungsquerschnitt Q vergrößert, indem der Strömungskörper 20 in die erste Richtung bewegt wird, beispielsweise wird der Strömungsquerschnitt verringert, indem der Strömungskörper 20 in die zweite Richtung verschoben wird.

Die Koppeleinrichtung 52 umfasst außerdem ein zweites Koppelelement 56, welches vorliegend als zweite Drehscheibe ausgebildet ist. Das Koppelelement 56 ist um eine zweite Koppelelementdrehachse relativ zu dem Gehäuse 14 drehbar, wobei beispielsweise die Koppelelementdrehachsen voneinander beabstandet sind und parallel zueinander verlaufen, oder die Koppelelementdrehachsen verlaufen windschief zueinander.

Aus Fig. 5 ist erkennbar, dass das zweite Koppelelement 56 eine Führungskulisse 58 mit einem ersten Führungskulissenbereich 60 und einem zweiten Führungskulissenbereich 62 aufweist, wobei die Führungskulissenbereiche 60 und 62 miteinander verbunden sind beziehungsweise ineinander übergehen. In die Führungskulisse 58 greift ein Schieber 64 ein, welcher insbesondere entlang der Bewegungsrichtung relativ zu dem Gehäuse 14 verschiebbar ist. Wird das Koppelelement 58 um die zweite Koppelelementdrehachse relativ zu dem Gehäuse 14 gedreht, während der Schieber 64 (noch) in den ersten Führungskulissenbereich 60 eingreift, so unterbleibt beispielsweise ein relativ zu dem Gehäuse 14 erfolgendes Verschieben des Schiebers 64, insbesondere dadurch, dass beispielsweise der erste Führungskulissenbereich 60 einen solchen Radius aufweist oder auf einem solchen Kreis liegt oder verläuft, dessen Mittelpunkt auf der zweiten Koppelelementdrehachse liegt. Kommt jedoch der Schieber 64 in den zweiten Führungskulissenbereich 62, so dass beispielsweise das zweite Koppelelement 56 um die zweite Koppelelementdrehachse relativ zu dem Gehäuse 14 gedreht wird, während der Schieber 64 in den zweiten Führungskulissenbereich 62 eingreift, so wird mittels des zweiten Führungskulissenbereichs 62 der Schieber 64 insbesondere entlang der Bewegungsrichtung relativ zu dem Gehäuse 14 verschoben. Hierzu gleitet beispielsweise der Schieber 64 beziehungsweise ein in die Führungskulisse 58 eingreifender Teilbereich des Schiebers 64 an den zweiten Führungskulissenbereich 62 begrenzenden Wandungsbereichen des zweiten Koppelelements 56 derart ab, dass dadurch, dass das zweite Koppelelement 56 um die zweite Koppelelementdrehachse relativ zu dem Gehäuse 14 gedreht wird, der Schieber 64 insbesondere in einer Bewegungsrichtung relativ zu dem Gehäuse 14 verschoben wird.

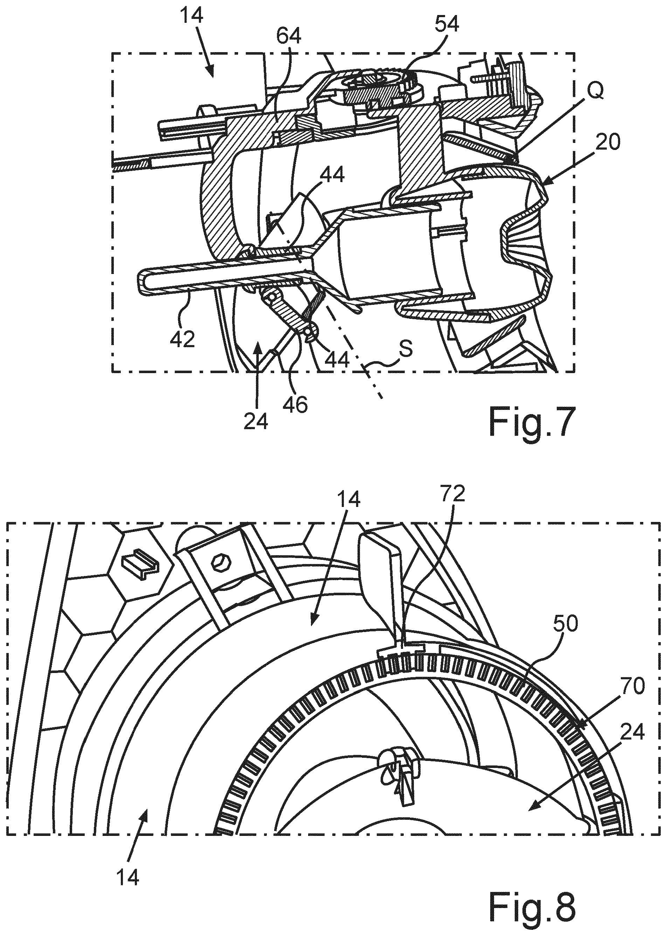

Aus Fig. 6 und 7 ist erkennbar, dass der Schieber 64 mit der Lagerungshülse 44 verbunden ist, so dass die Lagerungshülse 44 mit dem Schieber 64 insbesondere entlang der Bewegungsrichtung relativ zu dem Gehäuse 14 mit verschiebbar ist. Wird somit der Schieber 64 insbesondere entlang der Bewegungsrichtung relativ zu dem Gehäuse 14 verschoben, so wird hierdurch die Lagerungshülse 44 mit dem Schieber 64 mit verschoben, so dass die Lagerungshülse 44 entlang des Lagerungsbereiches 42 verschoben wird. Hierdurch wird die Leitklappe 24 relativ zu dem Gehäuse 14 verschwenkt. Werden beispielsweise ausgehend von der in Fig. 2 gezeigten, zweiten Schwenkstellung der Leitklappe 24 der Schieber 64 und mit diesem die Lagerungshülse 44 in die zuvor genannte, erste Richtung relativ zu dem Gehäuse 14 verschoben, so wird hierdurch beispielsweise die Leitklappe 24 aus der zweiten Schwenkstellung in die in Fig. 3 gezeigte erste Schwenkstellung relativ zu dem Gehäuse 14 verschwenkt. Werden beispielsweise der Schieber 64 und mit diesem die Lagerungshülse 44 ausgehend von der in Fig. 3 gezeigten, ersten Schwenkstellung der Leitklappe 24 in die zweite Richtung relativ zu dem Gehäuse 14 verschoben, so wird hierdurch die Leitklappe 24 aus der in Fig. 3 gezeigten, ersten Schwenkstellung in die in Fig. 4 gezeigte zweite Schwenkstellung relativ zu dem Gehäuse 14 verschwenkt.

Die Koppelelemente 54 und 56 sind, insbesondere drehmomentenübertragend, miteinander gekoppelt, derart, dass durch Drehen des Koppelelements 54 um die Koppelelementdrehachse relativ zu dem Gehäuse 14 das zweite Koppelelement 56 um die zweite Koppelelementdrehachse relativ zu dem Gehäuse 14 drehbar ist beziehungsweise gedreht wird. Hierzu weisen die Koppelelemente 54 und 56 Verzahnungen 66 und 68 auf, welche als Außenverzahnungen ausgebildet sind und ineinander greifen, mithin in Eingriff miteinander stehen. Der zuvor genannte, insbesondere elektrisch betreibbare, Aktor ist beispielsweise mit dem Koppelelement 54 gekoppelt oder koppelbar, so dass mittels des Aktors das erste Koppelelement 54 antreibbar und dadurch um die erste Koppelelementdrehachse relativ zu dem Gehäuse 14 drehbar ist. Wird mittels des Aktors das Koppelelement 54 um die erste Koppelelementdrehachse relativ zu dem Gehäuse 14 gedreht, so wird aufgrund der beschriebenen Kopplung des Koppelelements 54 mit dem Koppelelement 56 das Koppelelement 56 von dem Koppelelement 54 angetrieben und dadurch um die zweite Koppelelementdrehachse relativ zu dem Gehäuse 14 gedreht. So lange der Schieber 64 bezogen auf die Führungskulissenbereiche 60 und 62 nur in den Führungskulissenbereich 60 eingreift, unterbleibt ein Verschwenken der Leitklappe 24, während die Koppelelemente 54 und 56 gedreht werden. Treibt somit beispielsweise der Aktor das Koppelelement 54 derart an, dass das Koppelelement 54 und somit das Koppelelement 56 derart, insbesondere gleichzeitig, gedreht werden, dass der Schieber 64 bezogen auf die Führungskulissenbereiche 60, 62 nur in den Führungskulissenbereich 60 eingreift, so werden sonst beide Koppelelemente 54, 56 gleichzeitig gedreht, und durch das Drehen des Koppelelements 54 wird der Strömungskörper 20 relativ zu dem Gehäuse 14 verschoben, jedoch unterbleibt dabei ein Verschwenken der Leitklappe 24. Somit ist es beispielsweise möglich, den sich zunächst in einer ersten Stellung befindenden Strömungskörper 20 in die zweite Richtung und dadurch in eine zweite Stellung zu verschieben, mithin den Strömungsquerschnitt Q von einem ersten Wert auf einen gegenüber dem ersten Wert größeren, den zweiten Wert einzustellen, während ein Bewegen der Leitklappe 24 relativ zu dem Gehäuse 14 unterbleibt. Werden ausgehend von der zweiten Stellung des Strömungskörpers 20 die Koppelelemente 54, 56 weiter gedreht, derart, dass der Schieber 64 von dem Führungskulissenbereich 60 in den Führungskulissenbereich 62 kommt und entlang des Führungskulissenbereichs 62 bewegt wird, so kann hierdurch, insbesondere während ein Bewegen des Strömungskörpers 20 relativ zu dem Gehäuse 14 unterbleibt, die Leitklappe 24 relativ zu dem Gehäuse 14 verschwenkt werden. Werden somit beispielsweise die Koppelelemente 54 und 56 relativ zu dem Gehäuse 14 gedreht, während der Schieber 64 bezogen auf die Führungskulissenbereiche 60 und 62 nur in den Führungskulissenbereich 62 eingreift, so kann mittels des Aktors die Leitklappe 24 relativ zu dem Gehäuse 14 um die genannte Schwenkachse verschwenkt werden, während ein Bewegen des Strömungskörpers 20 relativ zu dem Gehäuse 14 unterbleibt. Insbesondere ist erkennbar, dass sich die jeweilige Verzahnung 66, 68 in um die jeweilige Koppelelementdrehachse verlaufender Umfangsrichtung des jeweiligen Koppelelements 54, 56 nicht vollständig, sondern nur teilweise um das jeweilige Koppelelement 54, 56 herum erstreckt.

Die genannte Schwenkachse, um welche die Leitklappe 24 relativ zu dem Gehäuse 14 verschwenkbar ist, ist aus Fig. 7 erkennbar und dort mit S bezeichnet.

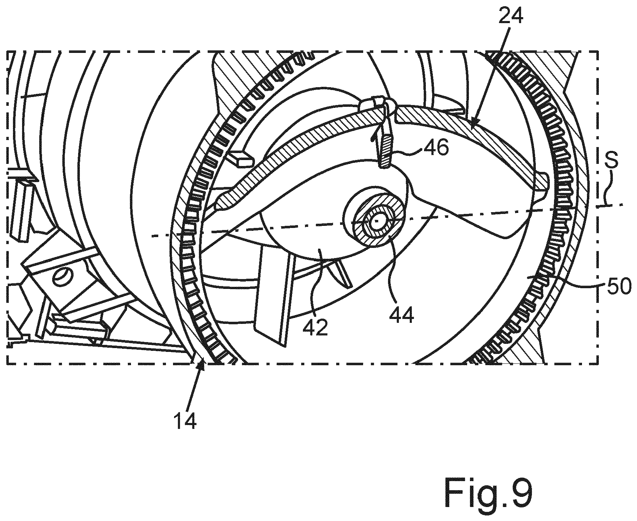

Aus Fig. 8 und 9 ist erkennbar, dass das Gehäuseteil 50 eine als Außenverzahnung ausgebildete Verzahnung 70 aufweist, welche beispielsweise an einer axialen Stirnseite des Gehäuseteils 50 ausgebildet, insbesondere nach Art einer Verzahnung eines Tellerrads. Vorgesehen ist auch ein Zahnrad 72, welches um eine Zahnraddrehachse relativ zu dem Gehäuse 14 drehbar ist. Das Zahnrad 72 weist insbesondere nach Art eines Ritzels eine mit der Verzahnung 70 korrespondierende Zahnradverzahnung auf, welche in Eingriff mit der korrespondierenden Verzahnung 70 steht. Die Zahnraddrehachse verläuft senkrecht zur Drehachse D. Wird nun das Zahnrad 72 um die Zahnraddrehachse relativ zu dem Gehäuse 14 gedreht, so wird diese Drehung des Zahnrads 72 mittels der Zahnradverzahnung und der Verzahnung 70 in eine Drehung des Gehäuseteils 50 um die Drehachse D relativ zu dem Gehäuseteil 48 umgewandelt. Dabei ist beispielsweise ein zusätzlich zum zuvor genannten Aktor vorgesehener, zweiter Aktor vorgesehen, welcher beispielsweise elektrisch betreibbar ist. Mittels des zweiten Aktors kann das Zahnrad 72 angetrieben und dadurch um die Zahnraddrehachse relativ zu dem Gehäuse 14 gedreht werden, wodurch das Gehäuseteil 50 von dem Zahnrad 72 angetrieben sind und die Drehachse D relativ zu dem Gehäuseteil 48 gedreht wird. Hierdurch wird die Leitklappe 24 um die Drehachse D relativ zu dem Gehäuseteil 48 gedreht. Es ist somit erkennbar, dass das Gehäuseteil 50 und mit diesem die Leitklappe 24 um die Drehachse D relativ zu dem Gehäuseteil 48 gedreht werden können, ohne die Leitklappe 24 um die Schwenkachse S relativ zu dem Gehäuse 14 zu verschwenken und umgekehrt, so dass die um die Drehachse D erfolgende Drehung der Leitklappe 24 und das um die Schwenkachse S erfolgende Verschwenken der Leitklappe 24, insbesondere vollständig, unabhängig voneinander erfolgen können. Dadurch kann die Ausströmrichtung besonders bedarfsgerecht eingestellt werden. Aus Fig. 9 besonders gut erkennbar ist die Kopplung der Leitklappe 24 mit dem Gehäuseteil 50. Erkennbar ist auch die Schwenkachse S.

## Patentansprüche

1. Luftausströmer (10) zum Belüften eines Innenraums (12) eines Fahrzeugs, mit einem Gehäuse (14), welches zum Belüften des Innenraums (12) von Luft durchströmbar ist, mit einem in dem Gehäuse (14) angeordneten und von der Luft umströmbaren Strömungskörper (20), und mit einer stromauf des Strömungskörpers (20) angeordneten und relativ zu dem Gehäuse (14) und relativ zu dem Strömungskörper (20) bewegbaren Leitklappe (24), mittels welcher eine Ausströmrichtung (26), in welche die Luft aus dem Luftausströmer (10) ausströmt, einstellbar ist, wobei der Strömungskörper (20) relativ zu dem Gehäuse (14) translatorisch bewegbar ist, wodurch ein von der Luft durchströmbarer und in dem Gehäuse (14) angeordneter Strömungsquerschnitt (Q) des Luftausströmers (10) einstellbar ist, wobei zum Belüften des Innenraums (12) das Gehäuse (14) zumindest stromauf der Leitklappe (24) in eine Strömungsrichtung (34) von der Luft durchströmbar ist,
**dadurch gekennzeichnet, dass**
die Leitklappe (24) um eine mit der Strömungsrichtung (34) zusammenfallende Drehachse (D) relativ zu wenigstens einem Gehäuseteil (48) des Gehäuses (14) und relativ zu dem Strömungskörper (20) drehbar ist, um dadurch die Ausströmrichtung (26) einzustellen.

2. Luftausströmer (10) nach Anspruch 1,
**dadurch gekennzeichnet, dass**
der Strömungskörper (20) entlang der Strömungsrichtung (34) relativ zu dem Gehäuse (14) translatorisch hin- und herbewegbar ist, wodurch der Strömungsquerschnitt (Q) einstellbar ist.

3. Luftausströmer (10) nach Anspruch 1 oder 2,
**dadurch gekennzeichnet, dass**
der Strömungskörper (20) zumindest über seine überwiegende, entlang der Strömungsrichtung (34) verlaufenden Länge außenumfangsseitig rotationssymmetrisch ausgebildet ist.

4. Luftausströmer (10) nach einem der Ansprüche 1 bis 3,
**dadurch gekennzeichnet, dass**
die Leitklappe (24) um eine senkrecht zur Strömungsrichtung (34) verlaufende Schwenkachse (S) relativ zu dem Gehäuse (14) und relativ zu dem Strömungskörper (20) verschwenkbar ist, um dadurch die Ausströmrichtung (26) einzustellen.

5. Luftausströmer (10) nach Anspruch 1,
**dadurch gekennzeichnet, dass**
das Gehäuse (14) das wenigstens eine Gehäuseteil (48) als erstes Gehäuseteil (48) und ein zweites, mit der Leitklappe (24) gekoppeltes Gehäuseteil (50) aufweist, welches mit der Leitklappe (24) um die Drehachse (D) relativ zu dem ersten Gehäuseteil (48) und relativ zu dem Strömungskörper (20) drehbar ist.

6. Luftausströmer (10) nach einem der vorhergehenden Ansprüche,
**dadurch gekennzeichnet, dass**
eine Koppeleinrichtung (52) vorgesehen ist, mittels welcher der Strömungskörper (20) und die Leitklappe (24) miteinander derart gekoppelt sind, dass mittels genau eines Aktors sowohl der Strömungskörper (20) als auch die Leitklappe (24) bewegbar sind.

7. Luftausströmer (10) nach einem der vorhergehenden Ansprüche,
**dadurch gekennzeichnet, dass**
das Gehäuse (14) zumindest in einem Längenbereich innenumfangsseitig rotationssymmetrisch ausgebildet ist, wobei der Strömungskörper (20) in dem Längenbereich angeordnet ist.

8. Fahrzeug, mit wenigstens einem Luftausströmer (10) nach einem der vorhergehenden Ansprüche.

## Claims

1. Air vent (10) for ventilating an interior (12) of a motor vehicle, comprising a housing (14) through which air can flow in order to ventilate the interior (12), a flow body (20) arranged in the housing (14) and around which air can flow, and a guide flap (24) arranged upstream of the flow body (20) and movable relative to the housing (14) and relative to the flow body (20), by means of which guide flap an outflow direction (26) in which the air flows out of the air vent (10) is adjustable, the flow body (20) being translationally movable relative to the housing (14), as a result of which a flow cross-section (Q) of the air vent (10) through which air can flow and which is arranged in the housing (14) is adjustable, the air being able to flow through the housing (14) in a flow direction (34), at least upstream of the guide flap (24), in order to ventilate the interior (12),
**characterized in that**
the guide flap (24) is rotatable, relative to at least one housing part (48) of the housing (14) and relative to the flow body (20), about an axis of rotation (D) coinciding with the flow direction (34) in order to thereby adjust the outflow direction (26).

2. Air vent (10) according to claim 1,
**characterized in that**
the flow body (20) is translationally movable back and forth along the flow direction (34) relative to the housing (14), as a result of which the flow cross-section (Q) is adjustable.

3. Air vent (10) according to claim 1 or claim 2,
**characterized in that**
the outer circumference of the flow body (20) is rotationally symmetrical at least over most of its length running along the flow direction (34).

4. Air vent (10) according to any of claims 1 to 3,
**characterized in that**
the guide flap (24) is pivotable, relative to the housing (14) and relative to the flow body (20), about a pivot axis (S) which runs perpendicularly to the flow direction (34), in order to thereby adjust the outflow direction (26).

5. Air vent (10) according to claim 1,
**characterized in that**
the housing (14) comprises the at least one housing part (48) as a first housing part (48) and a second housing part (50) coupled to the guide flap (24), which second housing part is rotatable, together with the guide flap (24), relative to the first housing part (48) and relative to the flow body (20), about the axis of rotation (D).

6. Air vent (10) according to any of the preceding claims,
**characterized in that**
a coupling device (52) is provided, by means of which the flow body (20) and the guide flap (24) are coupled to one another such that both the flow body (20) and the guide flap (24) are movable by means of exactly one actuator.

7. Air vent (10) according to any of the preceding claims,
**characterized in that**
the inner circumference of the housing (14) is rotationally symmetrical at least in a length region, the flow body (20) being arranged in the length region.

8. Motor vehicle comprising at least one air vent (10) according to any of the preceding claims.

## Revendications

1. Purgeur d'air (10) permettant l'aération d'un habitacle (12) d'un véhicule, comportant un boîtier (14) pouvant être traversé par de l'air pour l'aération de l'habitacle (12), comportant un corps d'écoulement (20) disposé dans le boîtier (14) et pouvant être contourné par l'air, et comportant un clapet de guidage (24) disposé en amont du corps d'écoulement (20) et pouvant être déplacé par rapport au boîtier (14) et par rapport au corps d'écoulement (20), au moyen duquel clapet de guidage une direction de purge (26) peut être réglée dans laquelle l'air est purgé hors du purgeur d'air (10), dans lequel le corps d'écoulement (20) peut être déplacé en translation par rapport au boîtier (14), moyennant quoi une section transversale d'écoulement (Q) du purgeur d'air (10) pouvant être traversée par l'air et disposée dans le boîtier (14) peut être réglée, dans lequel le boîtier (14) peut être traversé par l'air au moins en amont du clapet de guidage (24) dans une direction d'écoulement (34) pour l'aération de l'habitacle (12),
**caractérisé en ce que**
le clapet de guidage (24) peut tourner autour d'un axe de rotation (D) coïncidant avec la direction d'écoulement (34) par rapport à au moins une partie de boîtier (48) du boîtier (14) et par rapport au corps d'écoulement (20) afin de régler ainsi la direction de purge (26).

2. Purgeur d'air (10) selon la revendication 1,
**caractérisé en ce que**
le corps d'écoulement (20) peut être déplacé en translation en va-et-vient le long de la direction d'écoulement (34) par rapport au boîtier (14), moyennant quoi la section transversale d'écoulement (Q) peut être réglée.

3. Purgeur d'air (10) selon la revendication 1 ou 2,
**caractérisé en ce que**
le corps d'écoulement (20) est réalisé à symétrie de révolution côté circonférence extérieure au moins sur sa longueur principale s'étendant le long de la direction d'écoulement (34).

4. Purgeur d'air (10) selon l'une des revendications 1 à 3,
**caractérisé en ce que**
le clapet de guidage (24) peut pivoter par rapport au boîtier (14) et par rapport au corps d'écoulement (20) autour d'un axe de pivotement (S) s'étendant perpendiculairement à la direction d'écoulement (34) afin de régler ainsi la direction de purge (26).

5. Purgeur d'air (10) selon la revendication 1,
**caractérisé en ce que**
le boîtier (14) présente l'au moins une partie de boîtier (48) comme première partie de boîtier (48) et une seconde partie de boîtier (50) accouplée au clapet de guidage (24), laquelle peut tourner, avec le clapet de guidage (24), autour de l'axe de rotation (D) par rapport à la première partie de boîtier (48) et par rapport au corps d'écoulement (20).

6. Purgeur d'air (10) selon l'une des revendications précédentes,
**caractérisé en ce que**
un dispositif d'accouplement (52) est prévu, au moyen duquel le corps d'écoulement (20) et le clapet de guidage (24) sont accouplés l'un à l'autre de telle sorte que, au moyen d'exactement un actionneur, aussi bien le corps d'écoulement (20) que le clapet de guidage (24) peuvent être déplacés.

7. Purgeur d'air (10) selon l'une des revendications précédentes,
**caractérisé en ce que**
le boîtier (14) est réalisé à symétrie de révolution côté circonférence intérieure au moins dans une zone de longueur, dans lequel le corps d'écoulement (20) est disposé dans la zone de longueur.

8. Véhicule, comportant au moins un purgeur d'air (10) selon l'une des revendications précédentes.
